# EUROPEAN PATENT SPECIFICATION

(11) **EP 2 381 736 B1**
(45) Date of publication and mention of the grant of the patent: **29.07.2015**
(21) Application number: 09838154.4
(22) Date of filing: 21.12.2009
(51) Int. Cl.: H04W 80/00, H04W 8/06, H04L 29/08, H04W 8/18, H04W 36/00

(54) **METHOD AND SYSTEM TO ESTABLISH RELATION BETWEEN SERVICE NETWORK ELEMENT AND MME AND USER EQUIPMENT**
VERFAHREN UND SYSTEM ZUR HERSTELLUNG EINER BEZIEHUNG ZWISCHEN DIENSTNETZELEMENTEN UND MME SOWIE BENUTZERGERÄT
PROCÉDÉ ET SYSTÈME D'ÉTABLISSEMENT DE RELATION ENTRE ÉLÉMENT DE RÉSEAU DE SERVICE ET ENTITÉ DE GESTION DE MOBILITÉ, ET ÉQUIPEMENT UTILISATEUR

(30) Priority: 16.01.2009 CN 200910105097
(43) Date of publication of application: 26.10.2011
(73) Proprietor: ZTE Corporation, Shenzhen, Guangdong 518057 (CN)
(72) Inventor: HU, Ying, Shenzhen Guangdong 518057 (CN); ZONG, Zaifeng, Shenzhen Guangdong 518057 (CN)
(74) Representative: Price, Nigel John King
(86) International application number: PCT/CN2009/075792
(87) International publication number: WO 2010/081367

(56) References cited:
- EP-A1- 1 715 715
- WO-A1-2008/081310
- WO-A1-2008/084287
- WO-A1-2008/155314
- CN-A- 101 001 442
- CN-A- 101 188 862
- CN-A- 101 252 782
- CN-A- 101 257 707

## Description

### TECHNICAL FIELD

The present invention relates to the field of mobile communications, in particular to a method, system and User Equipment (UE) for establishing association between a service network element and an MME when the UE accesses an Evolved Packet System (EPS) network to implement a service.

### BACKGROUND

The 3rd Generation Partnership Project (3GPP) is committed to studying the evolution of Packet Switched Core (PS Core) network and Universal Mobile Telecommunication System Radio Access Network (UTRAN) at present in order to maintain strong competitiveness in the field of mobile communications, make it possible for an Evolved PS Core (EPC) to provide higher transmission rate and shorter transmission delay, and support the mobility management among Evolved UTRAN (E-UTRAN), GSM EDGE Radio Access Network (GERAN, wherein GSM is short for Global System for Mobile communications and EDGE is short for Enhanced Data Rate for GSM Evolution), UTRAN, Wireless Local Area Network (WLAN) and other non-3GPP access networks. The evolved mobile communication system is called the Evolved Packet System (EPS).

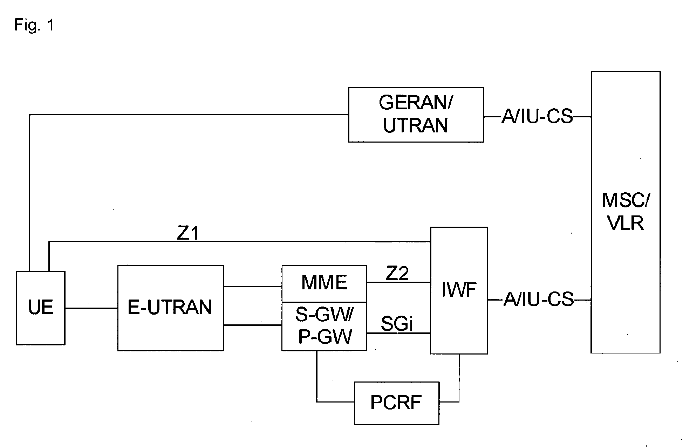

Fig. 1 shows a diagram of a network architecture to implement a Circuit Switch (CS) service when a UE accesses an EPS network in the prior art, and each entity in Fig. 1 is described as follows:
a UE, in the present invention, represents various terminals;
an E-UTRAN, which is an evolved radio access network and can provide higher uplink and downlink speeds, lower transmission delay and more reliable radio transmission; the network element contained in the E-UTRAN is evolved NodeB (eNodeB) and provides radio resources for the accessing of the UE;
a Serving GateWay (S-GW), which is an user plane entity and in charge of the user plane data routing processing;
a Packet Data Network GateWay (PDN GW or P-GW), which is in charge of the gateway function of a Packet Data Network (PDN) which the UE accesses; the P-GW and the S-GW may be arranged in one physical entity;
a Mobility Management Entity (MME), which is a control plane entity and a server for temporarily storing data of a subscriber, and is in charge of managing and storing UE context, such as a UE/subscriber identity, a mobility management state, a subscriber security parameter and the like, distributing temporary identity for a subscriber, and authenticating the subscriber when the UE currently camps in the tracking area or the network managed by the MME;
a Globally Unique Temporary UE Identity (GUTI), which is used for providing an unambiguous identification for a UE in the EPS network without revealing the permanent identity information of the subscriber or the UE, and consists of two parts which are a Globally Unique MME Identifier (GUMMEI) of an MME and an M-Temporary Mobile Subscriber Identity (M-TMSI) of the UE in the MME; wherein the GUMMEI is used for uniquely identifying the MME and the network which allocate the GUTI, and is the globally unique identifier of the MME, and the GUMMEI consists of a Mobile Country Code (MCC), a Mobile Network Code (MNC) and an MME Identifier (MMEI), wherein the MMEI consists of an MME Group ID (MMEGI) and an MME Code (MMEC); the M-TMSI is a temporary identity of a UE allocated by the MME when the UE accesses the MME, only the MME and the UE know the corresponding relationship between an International Mobile Subscriber Identity (IMSI) and the M-TMSI;
when the UE performs Attach or Tracking Area Update (TAU, the process that the UE updates location in the EPS network) in the EPS network, the access (Attach or Tracking Area Update) acceptance message sent from the MME to the UE includes the GUTI allocated by the MME to the UE and the UE receives the GUTI and stores it;
a GERAN/UTRAN, which is the radio access network of a GSM/ Universal Mobile Telecommunications System (UMTS) network; and
a Mobile Switching Center (MSC)/Visitor Location Register (VLR), which can be a new functional entity MSC server since the R4 period and is uniformly represented by MSC/VLR in the present invention, the MSC and the VLR which are two logically separated units are generally a combined physical node during the actual implementation and deployment.

When the UE accesses the GSM/UMTS network, a basic voice service, a supplementary service based on the voice service and other services of the subscriber are provided by the Circuit Switch (CS) domain ( called as circuit domain hereinafter); the MSC/VLR in Fig. 1 is the CS domain network element, and the subscriber can perform CS services, such as voice calls, with the users in this network and other networks (such as fixed telephone networks and other mobile networks) through the CS domain.

The EPS system per se cannot provide and control the CS services, such as a voice call, and can only provide the bearer for Internet Protocol (IP) data; a method for implementing the CS services, such as voice call in the prior art when the UE accesses the EPS network is that the CS services are controlled and implemented by the CS domain; and after the UE accesses the EPS network, the interaction signalling between the UE and the MSC/VLR is transmitted via an IP signalling channel borne on the EPS network to perform interaction procedures, such as location area update and call, and voice media streams are transmitted by an IP user plane channel borne on the EPS network. The IWF in Fig. 1 can be various network element with corresponding functions which is uniformly represented by the IWF in the present invention.

Fig. 1 shows the network architecture of the solution in the prior art to implement the CS services, such as voice, via controlled by the CS domain, when a UE accesses an EPS network; in the solution, in order to avoid modifying and affecting the MSC/VLR, an InterWorking Function (IWF) is newly introduced to complete the related modifications, the IWF behaves like a BSC/RNC towards the MSC/VLR, providing an A/IU-CS interface, converting an IP signalling message received from the UE into an A/IU-CS interface message and sending the converted A/IU-CS interface message to the MSC/VLR, and completing the conversion and sending in the reverse direction. After accessing the EPS network, the UE interacts with the IWF and MSC/VLR to perform the interaction procedures, such as registration, location area update and voice calls, through the IP signalling channel borne on the EPS network so as to complete the bear creating procedure and call setup procedure. When the UE needs to handover from the EPS network to the UMTS/GSM network and the MME receives a handover request, for the voice service, the MME needs to send a handover request message to the IWF which is currently serving the UE, so that the IWF can convert the handover request message and sends the handover request message to the MSC/VLR currently controlling the call; therefore, the MME which is currently serving the UE needs to know the information of IWF which is currently serving the UE.

A solution for solving the above mentioned problem may be: in the procedure of setting up a bearer for voice call, by modifying the Policy Control and Charging (PCC) mechanism, the IWF is allowed to transmit information to the MME through the PCC mechanism in the creating procedure of the voice bearer, so it is required to modify the network elements related to the PCC, such as Policy Charging Rule Function (PCRF), P-GW and S-GW.

Another solution which may be implemented is that the MME query an external database or a server storing the information of the IWF which is currently serving the UE, and in this solution, it is required to add interfaces and the like between the MME and the external database or the server.

For the two solutions above, it is required to modify and upgrade lots of network elements, such as the PCRF, which are not related to the function, thereby the design cost and implementation cost are certainly very high, and operating cost and risk of the network are also increased accordingly.

In addition, the related service network elements may also need to establish association with the MME when the UE accesses the EPS network to implement other services besides CS services, such as the voice.

Therefore, to sum up, it is required to provide a method for establishing association between a service network element which is currently serving the UE and the MME without modifying and upgrading the network elements which are not related to the function, such as the PCRF.

CN101257707A discloses "A routing method is adaptable to need of intercommunication between wireless access systems and all-IP core networks, cannot limit numbers of subscribers managed by a pool when a mobile terminal activates services in a wireless network. The mobile terminal preserves MME ID and Pool ID in advance, includes following steps: (a) sending a service request message and an identification information of the mobile terminal to a wireless access network unit, the identification information includes MME ID, Pool ID and PLMN ID; (b) the wireless access unit judges the Pool ID in the identification information is the ID of a core network node pool connected with wireless access network unit, the core network node pool belongs to the PLMN designated by the PLMN ID, and the MME ID is not empty, thereby the wireless access network unit sends the service request message of the terminal to a core network service node corresponding to a domain name according to the domain name of the core network service node composed of PLMN ID, Pool ID and MME ID."

### SUMMARY

Based on the above problem, the present invention aims to provide a method, system and UE for establishing association between a service network element and an MME when the UE accesses an EPS network to implement a service, so as to solve the problem of establishing association between the service network element and the MME without modifying the network elements which are not related to the function, such as the PCRF for implementing the function.

To achieve the objective, the present invention adopts the following technical solutions:
a method for establishing association between a service network element and an MME is applied to a scenario when a UE accesses an EPS network and the service network element needs to establish association with the MME, the method comprising:
   the service network element receives a message sent by the UE including an information parameter of the MME which is currently serving the UE; and
   the service network element acquires the information parameter of the MME which is currently serving the UE from the message sent by the UE so as to establish association between the service network element and the MME which is currently serving the UE;
   wherein after the association between the service network element and the MME is established, if there is a change with the MME, the method further comprises one of the followings: option 1) information of the service network element is transmitted among MMEs, the MME which is newly serving the UE acquires and updates the information of the service network element; or
   option 2) information of the service network element is transmitted among MMEs, the MME which is newly serving the UE acquires and updates the information of the service network element, and sends a message to the service network element to update the information of the MME stored in the service network element after acquiring the information of the service network element; or
   option 3) after receiving an allocated GUTI from the MME which is newly serving the UE, the UE triggers a new registration flow to the service network element to update the association between the service network element and the MME which is newly serving the UE; or
   option 4) the MME which is newly serving the UE allocates GUTI to the UE and instructs the UE to trigger a new registration flow to the service network element to update the association between the service network element and the MME which is newly serving the UE;
   wherein after the association between the service network element and the MME is established, if there is a change with the service network element, the method further comprises one of the followings: option 1) a new service network element acquires the information parameter of the MME from the old service network element, and sends a message to the MME to update the information parameter of the service network element stored in the MME to the information parameter of the new service network element; or
   option 2) the UE initiates a new registration procedure to update the association between the new service network element and the MME which is serving the UE.

Further, after the service network element acquires the information parameter of the MME, the method may further comprise: the service network element sends a message including an information parameter of the service network element to the MME; and the MME receives the message sent by the service network element including the information parameter of the service network element, and acquires the information parameter of the service network element from the message.

Further, the information parameter of the MME may be Globally Unique Temporary UE Identity (GUTI) or identifier information of the MME acquired according to the GUTI.

Further, when the message sent from the UE to the service network element is a service registration request message, the service network element may send a message including the information parameter of the service network element to the MME when the service network element receives the service registration request message from the UE or in a service implementing procedure.

Further, the service network element may be an IWF; the message sent from the UE to the IWF may be a registration request message or an update message; the message sent from the IWF to the MME including the information parameter of the service network element may be a registration request message, or a message for requesting to authenticate the validity of the UE, or a message for requesting to register the IWF as a handover anchor point for voice service.

Based on the method, the present invention further provides a system for establishing association between a service network element and an MME, the system comprising the MME and the service network element, wherein
the service network element is configured to receive a message sent by the UE including an information parameter of the MME which is currently serving the UE, and acquire the information parameter of the MME from the message so as to establish association between the service network element and the MME which is currently serving the UE;
wherein after the association between the service network element and the MME is established, if there is a change with the MME, the system further comprises:
the MME which is newly serving the UE acquires and updates the information of the service network element when information of the service network element is transmitted among MMEs; or
the MME which is newly serving the UE acquires and updates the information of the service network element when information of the service network element is transmitted among MMEs, and sends a message to the service network element to update the information of the MME stored in the service network element after acquiring the information of the service network element; or
the service network element receives a new registration flow from the UE which received a allocated GUTI from the MME which is newly serving the UE, the association between the service network element and the MME which is newly serving the UE will be updated; or
the MME which is newly serving the UE allocates GUTI to the UE and instructs the UE to trigger a new registration flow to the service network element to update the association between the service network element and the MME which is newly serving the UE;
wherein after the association between the service network element and the MME is established, if there is a change with the service network element, the system further comprises:
a new service network element acquires the information parameter of the MME from the old service network element, and sends a message to the MME to update the information parameter of the service network element stored in the MME to the information parameter of the new service network element; or
a new service network element receives a new registration flow sent by the UE including an information parameter of the MME which is serving the UE, the association between the new service network element and the MME which is serving the UE will be updated.

Besides, the service network element may be further configured to send a message including an information parameter of the service network element to the MME; and the MME may be configured to receive the message sent by the service network element including the information parameter of the service network element, and acquire the information parameter of the service network element from the message.

Moreover, the service network element may specifically comprise: a receiving unit, an information acquiring unit and a sending unit; wherein
the receiving unit may be configured to receive the message sent by the UE including the information parameter of the MME which is currently serving the UE;
the information acquiring unit may be configured to acquire the information parameter of the MME; and
the sending unit may be configured to send the message including the information parameter of the service network element to the MME.

Further, the service network element may be an IWF.

In addition, the UE is configured to send to a service network element a message including an information parameter of an MME which is currently serving the UE;
further, after the association between the service network element and the MME is established, if there is a change with the MME, the UE triggers a new registration flow to the service network element to update the association between the service network element and the MME which is newly serving the UE after receiving an allocated GUTI from the MME which is newly serving the UE; or
after the association between the service network element and the MME is established, if there is a change with the service network element, the UE initiates a new registration procedure to update the association between the new service network element and the MME which is serving the UE.

Compared with the prior art, the method of the present invention realizes the requirement of acquiring the MME information and establishing association between the IWF, as well as the service module, and the MME without modifying and upgrading network elements related to the PCC architecture for implementing the function, reduces the operating cost and risk of the existing network and favours the prompt application of the EPS network.

### BRIEF DESCRIPTION OF THE DRAWINGS

Fig. 1 shows a diagram of a network architecture to implement a CS service when a UE accesses an EPS network in the prior art;
Fig. 2 is a schematic flowchart of the method in the present invention;
Fig. 3 is a schematic flowchart of the method according to the first embodiment of the present invention;
Fig. 4 is a schematic flowchart of the method according to the second embodiment of the present invention;
Fig. 5 is a schematic flowchart of the method according to the third embodiment of the present invention;
Fig. 6 is a schematic flowchart of the method according to the fourth embodiment of the present invention; and
Fig. 7 is a schematic diagram of the structure of the system according to the fifth embodiment of the present invention.

### DETAILED DESCRIPTION

The method for establishing association between a service network element which the UE accesses via the EPS network and an MME is further described in detail below in combination with the drawings.

The service network element in the present invention refers to that: the UE accesses the network element via the EPS network and the network element needs to interact with the MME to complete some service functions. For example, the IWF which implements the CS service when the UE accesses the EPS network to complete the CS service is a service network element of the present invention.

Establishing association between the service network element and the MME refers to that: the service network element acquires the information of the MME and the MME acquires the information of the service network element; or the service network element acquires the information of the MME; or the MME acquires the information of the service network element.

After accessing the EPS network, the UE stores the GUTI information and can acquire the information of the MME which is currently serving the UE according to the GUTI; so in the method provided by the present invention that is different from the method in which the information of the service network element is acquired by the MME, the information of the MME which is currently serving the UE is acquired by the service network element at first, and then the service network element sends a message to the MME, so that the MME can acquire the information of the service network element which is currently serving the UE and in addition, with the method, there is only impacts on new interfaces among the UE, the service network element and the MME, and the modification causes little influence.

The present invention provides a universal method for implementing the establishment association between a service network element and an MME, the method is used to implement some services, such as handover of CS voice calls, when the UE accesses the EPS network; the method comprises: the GUTI of the UE which currently accesses the EPS network or the identifier information of the MME acquired according to the GUTI of the UE which currently accesses the EPS network, is sent to a service network element when the UE sends a message to the service network element to perform registration and other procedures; and the service network element acquires the information of the MME which is currently serving the UE according to the GUTI information or the identifier of the MME; then by sending a message to the MME the service network element establishes association with the MME (the MME acquires the information of the service network element and the service network element acquires the information of the MME). Subsequently, if the service network element or the MME is changed due to the moving of the UE or the like, when there is a change with the service network element or the MME, a new service network element and/or the MME updates association information stored.

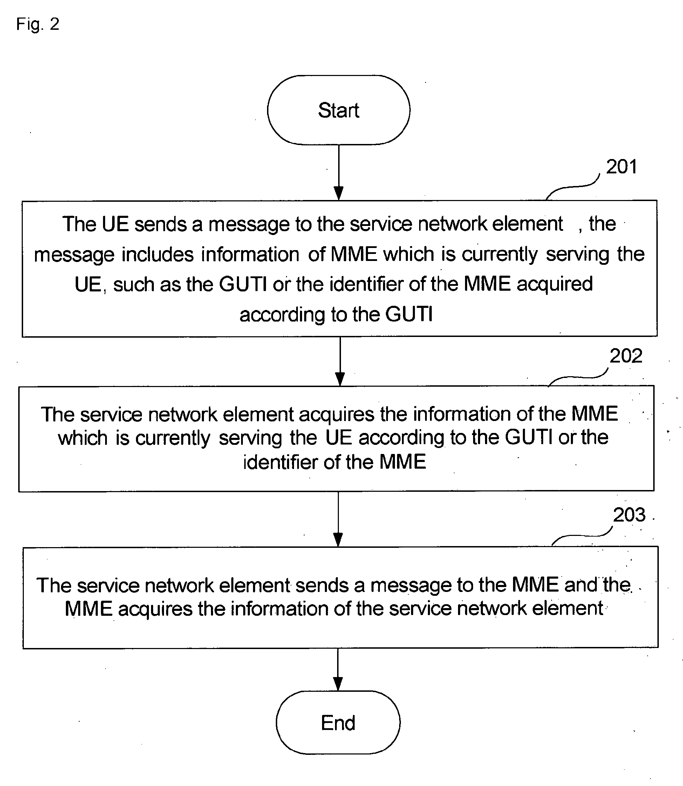

The flow of the method of the present invention is shown in Fig. 2:
201: the UE sends a message to the service network element, the message including information representing the information parameter of the MME which is currently serving the UE, such as the GUTI, or the identifier information of the MME acquired according to the GUTI;
202: the service network element acquires the information of the MME which is currently serving the UE according to the GUTI or the identifier of the MME; and
203: the service network element sends a message including the information parameter of the service network element to the MME, thus the MME acquires the information of the service network element, since then, the association between the MME and the service network element is established.

Afterwards, when there is a change with the service network element or the MME, the new service network element and/or the MME updates the association information stored. There are multiple specific implementing methods for updating association information, and one or any combination and changed modes of the following embodiments can be adopted as required for specific implementation.

In a preferred embodiment of the present invention, when the MME is changed due to the moving of the UE or network load adjustment or other reasons, the association information stored in the service network element and/or the MME is updated by the following ways:
1. the information of the service network element is transmitted among MMEs, and the MME which is newly serving the UE acquires and updates the information of the service network element stored; and/or the MME which is newly serving the UE sends a message to the service network element to update the information of the MME stored in the service network element after acquiring the information of the service network element;
2. after receiving an allocated GUTI from the MME which is newly serving the UE, the UE triggers a new registration flow to the service network element to update the association between the service network element and the MME which is newly serving the UE according to the flow or partial flow in Fig. 2;
3. the MME which is newly serving the UE allocates the GUTI to the UE, and instructs the UE to trigger a new registration flow to the service network element to update the association between the service network element and the MME which is newly serving the UE according to the flow or partial flow in Fig. 2.

In a preferred embodiment of the present invention, when the service network element is changed due to the moving of the UE or network load adjustment or other reasons, the association information stored in the service network element and/or the MME is updated by the following ways:
1. the new service network element acquires from the old service network element the information of the MME, such as GUTI or the identifier of the MME, then the new service network element acquires the information of the MME according to these information and then sends a message to the MME to update the association information stored in the MME to the information of the new service network element;
2. the UE initiates a new registration procedure and updates the association between the new service network element and the MME which is serving the UE according to the flow or partial flow in Fig. 2.

Before the method is implemented, the following procedure is performed: the UE accesses the EPS network at first, the UE sends an Attach or Tracking Area Update request to the MME; the MME, the UE and other network elements perform corresponding interaction and processing with one another; the GUTI is included in the Attach or Tracking Area Update request acceptance message sent from the MME to the UE; and the UE receives the message and stores the GUTI.

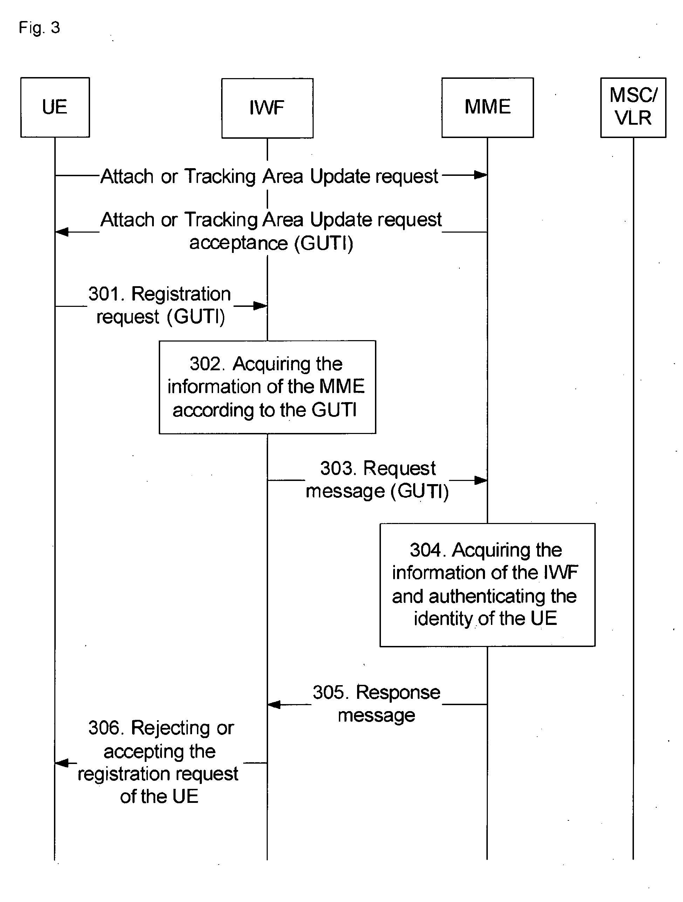

The method of the present invention may have multiple implementation flows. Four implementation flows are described in detail below in combination with the drawings. Fig. 3, Fig. 4, Fig. 5 and Fig. 6 respectively show the four possible implementation flows of the method applied to the architecture as shown in Fig. 1. In the implementation flows, the service network element is the IWF as shown in Fig. 1.

### First Embodiment

Fig. 3 is a schematic flowchart of the method according to the first embodiment of the present invention; as shown in Fig. 3, when the service network element is the IWF, the method may be the following flow:
step 301: the UE sends a registration request message to the IWF, wherein the message includes the GUTI information, or includes all or partial of the following parameters:
   the location information of the UE in the EPS network, such as Tracking Area Identity (TAI), E-UTRAN Cell Global Identifier (E-CGI), or TAI and E-CGI, IMSI, GUTI, the IP address(es) of the UE;
step 302: the IWF acquires the information of the MME, such as the address information of the MME, according to the GUTI, and stores or does not store the information of the MME;
step 303: the IWF sends a message to the MME, wherein the message may be sent at multiple moments and by multiple implementation ways during implementation, one of the implement instances is as show in the flow in Fig. 3, the IWF sends the MME a message for requesting registration and authentication of the validity of the UE; the message includes the GUTI information, the location information of the UE in the EPS network, all or partial of the information of the IMSI, IP address(es) of the UE, the address of the IWF; and the IWF requests the MME to perform identity authentication of the UE, such as the validity authentication;
step 304: the MME receives the message, acquires the information of the IWF, such as the address of the IWF, and stores or does not store the information; since then, the MME have acquired the information of the IWF which is currently serving the UE; the MME authenticates the identity of the UE, for example, according to the information stored in the MME, the MME can check whether the GUTI is valid, whether the corresponding relationship between the GUTI and the IMSI in the registration request message sent by the UE is consistent with the corresponding relationship stored in the MME, or whether the corresponding relationship between the GUTI and the IP address of the UE is consistent with the corresponding relationship stored in the MME, or whether the corresponding relationship between the IMSI and the IP address of the UE is consistent with the corresponding relationship stored in the MME, or whether the IP address of the UE is valid, or various combinations of the above determining methods and conditions and so on;
step 305: the MME sends a response message to the IWF, wherein the message may include the information indicating whether the UE is valid and other information;
step 306: the IWF sends a message to the UE, and rejects or accepts the registration request from the UE.

In the embodiment, the IWF may also not require the MME to authenticate the identity of the UE, and the parameters and processing are different correspondingly.

In the embodiment, the message sent from the UE to the IWF may not include the GUTI but the information related to the identifier of the MME and the user. The IWF acquires the information of the MME according to the identifier information of the MME and performs the corresponding processing.

In the implementing method of the embodiment, besides identity authentication of the UE is implemented by the interaction between the IWF and the MME, the following function can also be completed: when the UE does not perform a voice service, the IWF can interact with the MME through the acquired information and perform corresponding services. For example, the IWF receives related messages from the MSC/VLR, needs to acquire the current location information of the UE in the EPS network from the MME to implement the location service and so on; and the IWF can send a message to the MME which is currently serving the UE according to the acquired information of the MME to perform interaction and thereby acquire the location information. Or in the call setup procedure of the UE, the IWF queries the current location information of the UE and other information from the MME via the interface.

### Second Embodiment

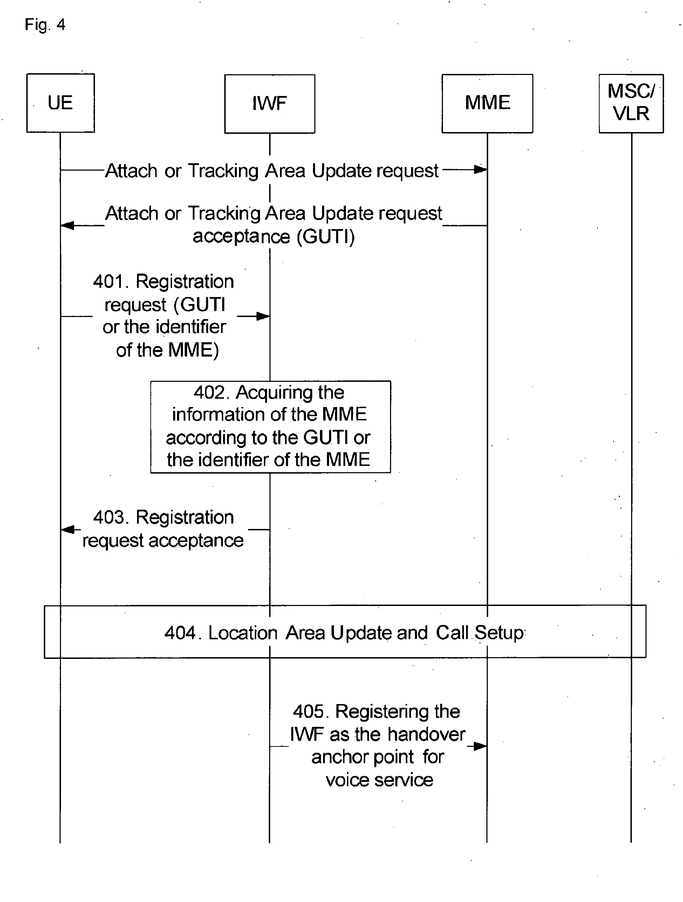

Fig. 4 is the schematic flowchart of the method according to the second embodiment of the present invention:
step 401: after accessing the EPS network, the UE sends a registration request message to the IWF, wherein the message includes the GUTI or the identifier of the MME acquired according to the GUTI;
step 402: the IWF acquires the information of the MME according to the GUTI or the identifier of the MME and stores it;
step 403: the IWF sends a registration request acceptance message to the UE;
step 404: the UE, IWF and MSC interact with one another to perform the location area update procedure and call setup procedure;
step 405: in or after the call setup procedure, the IWF sends to the MME a message for requesting to register the IWF as the handover anchor point for the voice service; the IWF is registered as the handover anchor point for the voice service; and the message includes the information parameter of the IWF; since then, the MME acquires the information of the IWF which is currently serving the UE; and during the handover procedure, the MME can send the handover request message to the IWF.

### Third Embodiment:

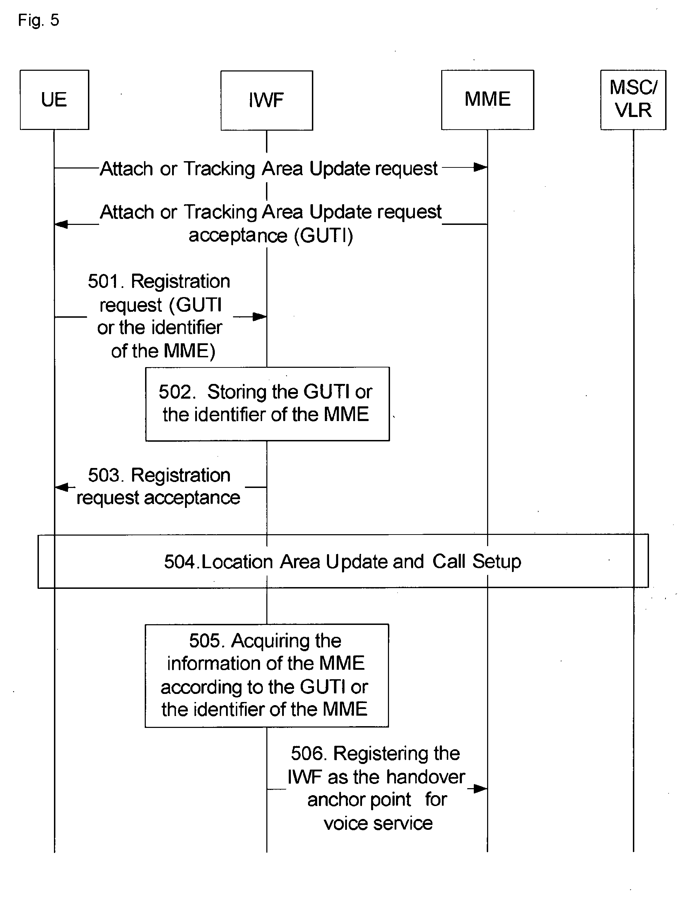

Fig. 5 is the schematic flowchart of the method according to the third embodiment of the present invention:
step 501: the UE sends a registration request message to the IWF, wherein the message includes the GUTI or the acquired identifier of the MME which is currently serving the UE according to the GUTI;
step 502: the IWF receives the message and stores the GUTI or the identifier of the MME;
step 503: the IWF returns a registration request acceptance message to the UE;
step 504: the UE, IWF and MSC interact with one another to perform the location area update procedure and call setup procedure;
step 505: in or after the call setup procedure, the IWF acquires the information of the MME according to the GUTI or the identifier of the MME;
step 506: in or after the call setup procedure, the IWF sends to the MME a message including the information parameter of the IWF for requesting to register the IWF as the handover anchor point for the voice service; the IWF is registered as the handover anchor point for the voice service; since then, the MME acquires the information of the IWF which is currently serving the UE; and during the handover procedure, the MME can send the handover request message to the IWF.

### Fourth Embodiment

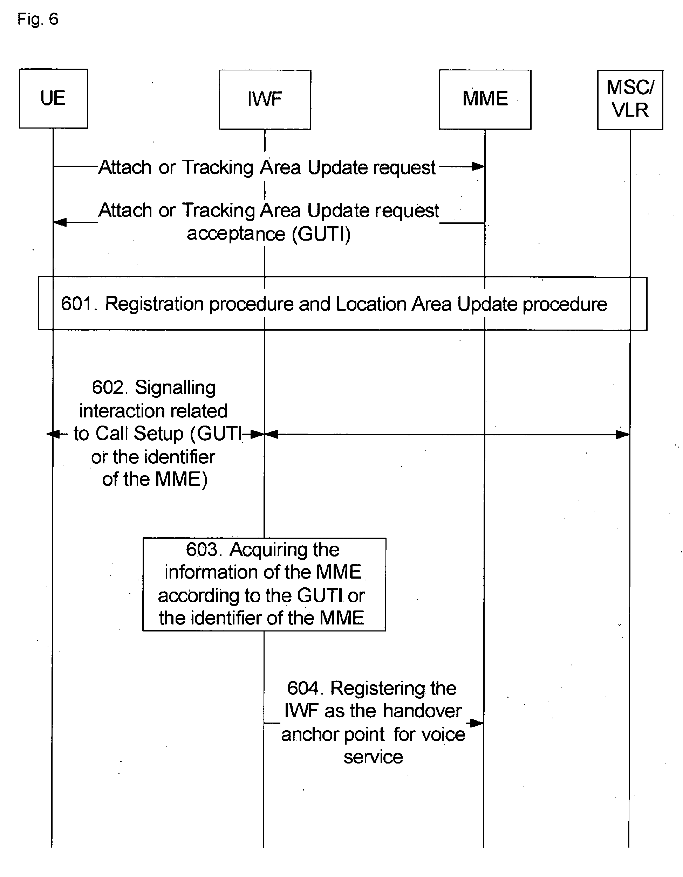

Fig. 6 is the schematic flowchart of the method according to the fourth embodiment of the present invention:
step 601: the UE, IWF and MSC interact with one another to perform the UE registration in the IWF and perform location area update in the MSC/VLR;
step 602: the UE, IWF and MSC perform signalling interaction related to call setup procedure with one another; and the message from the UE to the IWF including the GUTI or the identifier of the MME acquired according to the GUTI;
step 603: in or after the call setup procedure, the IWF acquires the information of the MME according to the GUTI or the identifier of the MME;
step 604: in or after the call setup procedure, according to the acquired information of the MME, the IWF sends a message to the MME which is serving the UE to request to register the IWF as the handover anchor point for the voice service; the IWF is registered as the handover anchor point for the voice service; and the message includes the information parameter of the IWF; since then, the MME acquires the information of the IWF which is currently serving the UE; and during the handover procedure, the MME can send the handover request message to the IWF.

### Fifth Embodiment

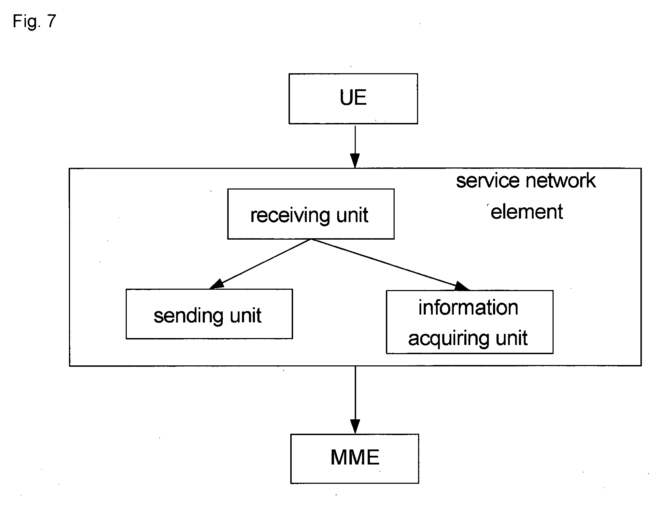

The present invention provides a system for establishing association between a service network element and an MME, and Fig. 7 is a schematic diagram of the structure of the system in the present invention. As shown in Fig. 7, the system provided in the present invention comprises:
a service network element configured to receive a message sent by the UE including the information parameter of the MME which is currently serving the UE, acquire the information parameter of the MME included in the message and send a message including the information parameter of the service network element to the MME; and
an MME configured to receive a message sent by the service network element including the information parameter of the service network element, and acquire the information parameter of the service network element.

Moreover, the service network element specifically comprises:
a receiving unit configured to receive the message sent by the UE including the information parameter of the MME which is currently serving the UE;
an information acquiring unit configured to acquire the information parameter of the MME; and
a sending unit configured to send a message including the information parameter of the service network element to the MME.

Moreover, the service network element is an IWF.

### Sixth Embodiment

The present invention further provides a User Equipment (UE), the UE sends to the service network element a message including the information parameter of the MME which is currently serving the UE.

To sum up, the method of the present invention realizes the requirement of establishing association between the IWF, as well as other service modules and the MME so as to handover a voice bearer and acquiring location information from the MME and the like functions without modifying and upgrading network elements related to the PCC architecture (such as PCRF, S-GW and P-GW) for implementing the functions, reduces the operating cost and risk of the network and favours the prompt application of the EPS network.

Obviously, those skilled in the art should understand that the above modules or steps of the present invention may be implemented by general computing devices, and they may be centralized in a single computing device or distributed in a network consisting of multiple computing devices. Optionally, the modules or steps may be implemented by program codes executable to the computing devices, so that they may be stored in a storage device and executed by the computing device, or respectively made into respective integrated circuit modules, or some of modules or steps are made into a single integrated circuit module. By doing so, the present invention is not limited to any specific combination of hardware and software.

The above mentioned are only preferred embodiments of the present invention and not used for limiting the present invention. For those skilled in the art, the present invention may have various alterations and changes within the scope of the claims.

## Claims

1. A method for establishing association between a service network element and a Mobility Management Entity, MME, which is applied to a scenario when a User Equipment, UE accesses an Evolved Packet System, EPS, network and the service network element needs to establish association with the MME, **characterized in that** the method comprises:
the service network element receiving a message sent by the UE including an information parameter of the MME which is currently serving the UE (S201); and
the service network element acquiring the information parameter of the MME which is currently serving the UE from the message sent by the UE so as to establish association between the service network element and the MME which is currently serving the UE (S202);
wherein after the association between the service network element and the MME is established, if there is a change with the MME, the method further comprises one of the followings:
option 1) information of the service network element being transmitted among MMEs, the MME which is newly serving the UE acquiring and updating the information of the service network element; or
option 2) information of the service network element being transmitted among MMEs, the MME which is newly serving the UE acquiring and updating the information of the service network element, and sending a message to the service network element to update the information of the MME stored in the service network element after acquiring the information of the service network element; or
option 3) after receiving an allocated GUTI from the MME which is newly serving the UE, the UE triggering a new registration flow to the service network element to update the association between the service network element and the MME which is newly serving the UE; or
option 4) the MME which is newly serving the UE allocating GUTI to the UE and instructing the UE to trigger a new registration flow to the service network element to update the association between the service network element and the MME which is newly serving the UE;
wherein after the association between the service network element and the MME is established, if there is a change with the service network element, the method further comprises one of the followings:
option 1) a new service network element acquiring the information parameter of the MME from the old service network element, and sending a message to the MME to update the information parameter of the service network element stored in the MME to the information parameter of the new service network element; or
option 2) the UE initiating a new registration procedure to update the association between the new service network element and the MME which is serving the UE.

2. The method according to claim 1, after the service network element acquires the information parameter of the MME, the method further comprising:
the service network element sending a message including an information parameter of the service network element to the MME (S203) ;
the MME receiving the message sent by the service network element including the information parameter of the service network element, and acquiring the information parameter of the service network element from the message.

3. The method according to claim 1 or 2, wherein
the information parameter of the MME is Globally Unique Temporary UE Identity, GUTI or identifier information of the MME acquired according to the GUTI.

4. The method according to claim 1 or 2, wherein when the message sent from the UE to the service network element is a service registration request message, the service network element sends a message including the information parameter of the service network element to the MME when the service network element receives the service registration request message from the UE or in a service implementing procedure.

5. The method according to any one of claims 1-4, wherein
the service network element is an IWF;
the message sent from the UE to the IWF is a registration request message or an update message;
the message sent from the IWF to the MME including the information parameter of the service network element is a registration request message, or a message for requesting to authenticate the validity of the UE, or a message for requesting to register the IWF as a handover anchor point for voice service.

6. A system for establishing association between a service network element and an MME, **characterized in that** the system comprises the MME and the service network element, wherein
the service network element being configured to receive a message sent by the UE including an information parameter of the MME which is currently serving the UE (S201), and acquire the information parameter of the MME from the message so as to establish association between the service network element and the MME which is currently serving the UE (S202);
wherein after the association between the service network element and the MME is established, if there is a change with the MME, the system further comprises:
the MME which is newly serving the UE acquires and updates the information of the service network element when information of the service network element is transmitted among MMEs; or
the MME which is newly serving the UE acquires and updates the information of the service network element when information of the service network element is transmitted among MMEs, and sends a message to the service network element to update the information of the MME stored in the service network element after acquiring the information of the service network element; or
the service network element receives a new registration flow from the UE which received a allocated GUTI from the MME which is newly serving the UE, the association between the service network element and the MME which is newly serving the UE will be updated; or
the MME which is newly serving the UE allocates GUTI to the UE and instructs the UE to trigger a new registration flow to the service network element to update the association between the service network element and the MME which is newly serving the UE;
wherein after the association between the service network element and the MME is established, if there is a change with the service network element, the system further comprises:
a new service network element acquires the information parameter of the MME from the old service network element, and sends a message to the MME to update the information parameter of the service network element stored in the MME to the information parameter of the new service network element; or
a new service network element receives a new registration flow sent by the UE including an information parameter of the MME which is serving the UE, the association between the new service network element and the MME which is serving the UE will be updated.

7. The system according to claim 6, wherein the service network element is further configured to send a message including an information parameter of the service network element to the MME; and the MME is configured to receive the message sent by the service network element including the information parameter of the service network element, and acquire the information parameter of the service network element from the message.

8. The system according to claim 6, wherein the service network element specifically comprises: a receiving unit, an information acquiring unit and a sending unit; wherein
the receiving unit is configured to receive the message sent by the UE including the information parameter of the MME which is currently serving the UE;
the information acquiring unit is configured to acquire the information parameter of the MME; and
the sending unit is configured to send the message including the information parameter of the service network element to the MME.

9. The system according to any one of claims 6-8, wherein the service network element is an IWF.

10. A User Equipment, UE, configured to send to a service network element a message including an information parameter of an MME which is currently serving the UE (S201);
wherein after the association between the service network element and the MME is established, if there is a change with the MME, the UE triggers a new registration flow to the service network element to update the association between the service network element and the MME which is newly serving the UE after receiving an allocated GUTI from the MME which is newly serving the UE; or
after the association between the service network element and the MME is established, if there is a change with the service network element, the UE initiates a new registration procedure to update the association between the new service network element and the MME which is serving the UE.

## Patentansprüche

1. Verfahren zum Einrichten einer Verbindung zwischen einem Dienstnetzelement und einer Mobilitätsverwaltungseinheit (MME), welches auf ein Szenario angewendet wird, wenn eine Benutzereinrichtung, UE, auf ein Evolved Packet System, EPS, Netz zugreift und das Dienstnetzelement eine Verbindung mit der MME einrichten muss, **dadurch gekennzeichnet, dass** das Verfahren umfasst:
das Dienstnetzelement empfängt eine von der UE gesendete Nachricht, welche einen Informationsparameter von der MME aufweist, welche derzeit die UE (S201) bedient; und
das Dienstnetzelement ermittelt den Informationsparameter der MME, welche derzeit die UE bedient, aus der von der UE gesendeten Nachricht, um eine Verbindung zwischen dem Dienstnetzelement und der MME, welche derzeit die UE (S202) bedient, einzurichten;
wobei, nachdem die Verbindung zwischen dem Dienstnetzelement und der MME eingerichtet ist, das Verfahren ferner eine der Folgenden umfasst, wenn eine Änderung bei der MME vorliegt:
Option 1) eine Information des Dienstnetzelements wird zwischen MMEs übertragen, wobei die MME, welche neuerdings die UE bedient, sich die Information des Dienstnetzelements aneignet und aktualisiert; oder
Option 2) eine Information des Dienstnetzelements wird zwischen MMEs übertragen, wobei die MME, welche neuerdings die UE bedient, sich die Information des Dienstnetzelements aneignet und aktualisiert und eine Nachricht zu dem Dienstnetzelement sendet, um die Information der MME, welche in dem Dienstnetzelement gespeichert ist, nach einem Aneignen der Informationen des Dienstnetzelements zu aktualisieren; oder
Option 3) nach einem Empfangen einer zugewiesenen GUTI von der MME, welche neuerdings die UE bedient, löst die UE einen neuen Registrierungsstrom zu dem Dienstnetzelement aus, um die Verbindung zwischen dem Dienstnetzelement und der MME, welche neuerdings die UE bedient, zu aktualisieren; oder
Option 4) die MME, welche neuerdings die UE bedient, ordnet eine GUTI der UE zu und weist die UE an, einen neuen Registrierungsstrom zu dem Dienstnetzelement auszulösen, um die Zuordnung zwischen dem Dienstnetzelement und der MME, welche neuerdings die UE bedient, zu aktualisieren;
wobei, nachdem die Verbindung zwischen dem Dienstnetzelement und der MME eingerichtet ist, das Verfahren ferner eine der Folgenden umfasst, wenn eine Änderung bei dem Dienstnetzelement vorliegt:
Option 1) ein neues Dienstnetzelement eignet sich den Informationsparameter der MME von dem alten Dienstnetzelement an und sendet eine Nachricht zu der MME, um den Informationsparameter des Dienstnetzelements, welcher in der MME gespeichert ist, auf den Informationsparameter des neuen Dienstnetzelements zu aktualisieren; oder
Option 2) die UE leitet einen neuen Registrierungsvorgang ein, um die Verbindung zwischen dem neuen Dienstnetzelement und der MME, welche die UE bedient, zu aktualisieren.

2. Verfahren nach Anspruch 1, wobei, nachdem das Dienstnetzelement sich den Informationsparameter der MME angeeignet hat, das Verfahren ferner umfasst:
das Dienstnetzelement sendet eine Nachricht, welche einen Informationsparameter des Dienstnetzelements aufweist, zu der MME (S203);
die MME empfängt die von dem Dienstnetzelement gesendete Nachricht, welche den Informationsparameter des Dienstnetzelements aufweist, und eignet sich den Informationsparameter des Dienstnetzelements aus der Nachricht an.

3. Verfahren nach Anspruch 1 oder 2, wobei
der Informationsparameter der MME ein globales eindeutiges temporäres UE-Identifizierungskennzeichen, GUTI, oder eine gemäß dem GUTI angeeignete Identifizierungsinformation der MME ist.

4. Verfahren nach Anspruch 1 oder 2, wobei, wenn die von der UE zu dem Dienstnetzelement gesendete Nachricht eine Dienstregistrierungsanforderungsnachricht ist, das Dienstnetzelement eine Nachricht, welche den Informationsparameter des Dienstnetzelements aufweist, zu der MME sendet, wenn das Dienstnetzelement die Dienstregistrierungsanforderungsnachricht von der UE oder in einem Dienstrealisierungsvorgang empfängt.

5. Verfahren nach einem der Ansprüche 1-4, wobei
das Dienstnetzelement ein IWF ist;
die von der UE zu dem IWF gesendete Nachricht eine Registrierungsanforderungsnachricht oder eine Aktualisierungsnachricht ist;
die von dem IWF zu der MME gesendete Nachricht, welche den Informationsparameter des Dienstnetzelements aufweist, eine Registrierungsanforderungsnachricht oder eine Nachricht für ein Anfordern, die Gültigkeit der UE zu authentifizieren, oder eine Nachricht für ein Anfordern, den IWF als einen Übergabeankerpunkt für einen Sprachdienst zu registrieren, ist.

6. System zum Einrichten einer Verbindung zwischen einem Dienstnetzelement und einer MME, **dadurch gekennzeichnet, dass** das System die MME und das Dienstnetzelement umfasst, wobei
das Dienstnetzelement ausgestaltet ist, eine von der UE gesendete Nachricht, welche einen Informationsparameter von der MME, die derzeit die UE (S201) bedient, aufweist, zu empfangen und sich den Informationsparameter von der MME aus der Nachricht anzueignen, um eine Verbindung zwischen dem Dienstnetzelement und der MME, welche derzeit die UE (S202) bedient, einzurichten;
wobei, nachdem die Verbindung zwischen dem Dienstnetzelement und der MME eingerichtet ist, das System, wenn eine Änderung bei der MME vorhanden ist, ferner umfasst:
die MME, welche neuerdings die UE bedient, eignet sich die Information des Dienstnetzelements an und aktualisiert sie, wenn eine Information des Dienstnetzelements zwischen MMEs übertragen wird; oder
die MME, welche neuerdings die UE bedient, eignet sich die Information des Dienstnetzelements an und aktualisiert sie, wenn eine Information des Dienstnetzelements zwischen MMEs übertragen wird, und sendet eine Nachricht zu dem Dienstnetzelement, um die Information der MME, welche in dem Dienstnetzelement gespeichert ist, nach einem Aneignen der Information des Dienstnetzelements zu aktualisieren; oder
das Dienstnetzelement empfängt einen neuen Registrierungsstrom von der UE, welche eine einem zugewiesenen GUTI von der MME, welche neuerdings die UE bedient, empfangen hat, wobei die Verbindung zwischen dem Dienstnetzelement und der MME, welche neuerdings die UE bedient, aktualisiert werden wird; oder
die MME, welche neuerdings die UE bedient, weist die GUTI der UE zu und weist die UE an, einen neuen Registrierungsstrom zu dem Dienstnetzelement auszulösen, um die Verbindung zwischen dem Dienstnetzelement und der MME, welche neuerdings die UE bedient, zu aktualisieren;
wobei, nachdem die Verbindung zwischen dem Dienstnetzelement und der MME eingerichtet ist, das System, wenn eine Änderung bei dem Dienstnetzelement vorhanden ist, ferner umfasst:
ein neues Dienstnetzelement eignet sich den Informationsparameter der MME von dem alten Dienstnetzelement an und sendet eine Nachricht zu der MME, um den Informationsparameter des Dienstnetzelements, welcher in der MME gespeichert ist, auf den Informationsparameter des neuen Dienstnetzelements zu aktualisieren; oder
ein neues Dienstnetzelement empfängt einen neuen Registrierungsstrom, welcher von der UE gesendet wird, welcher einen Informationsparameter der MME, welche die UE bedient, aufweist, wobei die Verbindung zwischen dem neuen Dienstnetzelement und der MME, welche die UE bedient, aktualisiert werden wird.

7. System nach Anspruch 6, wobei das Dienstnetzelement ferner ausgestaltet ist, eine Nachricht, welche einen Informationsparameter des Dienstnetzelements aufweist, zu der MME zu senden; und wobei die MME ausgestaltet ist, die von dem Dienstnetzelement gesendete Nachricht, welche den Informationsparameter des Dienstnetzelements aufweist zu empfangen und sich den Informationsparameter des Dienstnetzelements aus der Nachricht anzueignen.

8. System nach Anspruch 6, wobei das Dienstnetzelement speziell umfasst: eine Empfangseinheit, eine Informationsaneignungseinheit und eine Sendeeinheit; wobei
die Empfangseinheit ausgestaltet ist, die von der UE gesendete Nachricht, welche den Informationsparameter der MME, welche derzeit die UE bedient, aufweist, zu empfangen;
die Informationsaneignungseinheit ausgestaltet ist, sich den Informationsparameter der MME anzueignen; und
die Sendeeinheit ausgestaltet ist, die Nachricht, welche den Informationsparameter des Dienstnetzelements aufweist, zu der MME zu senden.

9. System nach einem der Ansprüche 6-8, wobei das Dienstnetzelement ein IWF ist.

10. Benutzereinrichtung, UE, welche ausgestaltet ist, eine Nachricht, welche einen Informationsparameter einer MME, welche derzeit die UE (S201) bedient, aufweist, zu einem Dienstnetzelement zu senden;
wobei, nachdem die Verbindung zwischen dem Dienstnetzelement und der MME eingerichtet ist, die UE, wenn eine Änderung bei der MME vorhanden ist, einen neuen Registrierungsstrom zu dem Dienstnetzelement auslöst, um die Verbindung zwischen dem Dienstnetzelement und der MME, welche neuerdings die UE bedient, zu aktualisieren, nachdem eine zugeordnete GUTI von der MME, welche neuerdings die UE bedient, empfangen wurde; oder
nachdem die Verbindung zwischen dem Dienstnetzelement und der MME eingerichtet wurde, die UE, wenn eine Änderung bei dem Dienstnetzelement vorhanden ist, einen neuen Registrierungsvorgang einleitet, um die Verbindung zwischen dem neuen Dienstnetzelement und der MME, welche die UE bedient, zu aktualisieren.

## Revendications

1. Procédé pour établir une association entre un élément d'un réseau de services et une Entité de Gestion de Mobilité, EGM, appliqué à un scenario dans lequel un Equipement Utilisateur, EU, accède à un réseau à Systèmes de Paquets Evolués (SPE), et l'élément de réseau de services a besoin d'établir une association avec l'EGM, le procédé étant **caractérisé en ce qu'**il comporte :
la réception, par l'élément de réseau de services, d'un message envoyé par l'EU et contenant un paramètre d'informations de l'EGM qui dessert alors l'EU (S201) ; et
l'acquisition, par l'élément de réseau de services, du paramètre d'informations de l'EGM qui dessert alors l'EU, à partir du message envoyé à l'EU, de façon à établir une association entre l'élément de réseau de services et l'EGM qui dessert alors l'EU (S202) ;
le procédé comportant en outre l'une des options suivantes si un changement affecte l'EGM après l'établissement de l'association entre l'élément de réseau de services et l'EGM :
option 1) transmission d'informations de l'élément de réseau de services entre des EGM, l'EGM qui dessert alors nouvellement l'EU acquérant et actualisant les informations de l'élément de réseau de services ; ou
option 2) transmission d'informations de l'élément de réseau de services entre des EGM, l'EGM qui dessert alors nouvellement l'EU acquérant et actualisant les informations de l'élément de réseau de services et envoi d'un message à l'élément de réseau de services pour actualiser les informations de l'EGM stockées dans l'élément de réseau de services après l'acquisition des informations de l'élément de réseau de services ; ou
option 3) après la réception d'une ITME attribuée envoyée par l'EGM qui dessert alors nouvellement l'EU, déclenchement, par l'EU, d'un nouveau flux d'inscription vers l'élément de réseau de services afin d'actualiser l'association entre l'élément de réseau de services et l'EGM qui dessert alors nouvellement l'EU ; ou
option 4) attribution, par l'EGM qui dessert nouvellement l'EU, d'une ITME à l'EU et demande à l'EU, par l'EGM, de déclencher un nouveau flux d'inscription vers l'élément de réseau de services afin d'actualiser l'association entre l'élément de réseau de services et l'EGM qui dessert alors nouvellement l'EU ;
le procédé comportant en outre l'une des options suivantes si un changement affecte l'élément de réseau de services après l'établissement de l'association entre l'élément de réseau de services et l'EGM :
option 1) acquisition, par un nouvel élément de réseau de services, du paramètre d'informations de l'EGM auprès de l'ancien élément de réseau de services et envoi d'un message à l'EGM pour actualiser le paramètre d'informations de l'élément de réseau de services stocké dans l'EGM pour le remplacer par le paramètre d'informations du nouvel élément de réseau de services ; ou
option 2) lancement, par l'EU, d'une nouvelle procédure d'inscription pour actualiser l'association entre le nouvel élément de réseau de services et l'EGM qui dessert alors l'EU.

2. Procédé selon la revendication 1, comportant en outre, après que l'élément de réseau de services a acquis le paramètre d'informations de l'EGM :
l'envoi à l'EGM, par l'élément de réseau de services, d'un message contenant un paramètre d'informations de l'élément de réseau de services (S203) ;
la réception, par l'EGM, du message envoyé par l'élément de réseau de services et contenant le paramètre d'informations de l'élément de réseau de services, et l'acquisition du paramètre d'informations de l'élément de réseau de services à partir du message.

3. Procédé selon la revendication 1 ou 2, dans lequel
le paramètre d'informations de EGM est l'Identité Temporaire Mondialement Exclusive d'EU, ITME, ou l'information d'identifiant de l'EGM acquis d'après l'ITME.

4. Procédé selon la revendication 1 ou 2, dans lequel, quand le message envoyé de l'EU à l'élément de réseau de services est un message de demande d'inscription à un service, l'élément de réseau de services envoie à l'EGM un message contenant le paramètre d'informations de l'élément de réseau de services lorsque l'élément de réseau de services reçoit de l'EU le message de demande d'inscription ou lors d'une procédure de mise en oeuvre de services.

5. Procédé selon l'une quelconque des revendications 1 à 4, dans lequel
l'élément de réseau de services est une fonction d'interopérabilité IWF ;
le message envoyé de l'EU à l'IWF est un message de demande d'inscription ou un message d'actualisation ;
le message envoyé de l'IWF à l'EGM, contenant le paramètre d'informations de l'élément de réseau de services, est un message de demande d'inscription ou un message pour demander d'authentifier la validité de l'EU ou un message pour demander d'inscrire l'IWF comme point d'ancrage de transfert pour service vocal.

6. Système pour établir une association entre un élément d'un réseau de services et une EGM, **caractérisé en ce que** le système comporte l'EGM et l'élément de réseau de services, dans lequel
l'élément de réseau de services est conçu pour recevoir un message envoyé par l'EU et contenant un paramètre d'informations de l'EGM qui dessert alors l'EU (S201), et pour acquérir le paramètre d'informations de l'EGM à partir du message de façon à établir une association entre l'élément de réseau de services et l'EGM qui dessert alors l'EU (S202) ;
le système comportant en outre, si un changement affecte l'EGM après l'établissement de l'association entre l'élément de réseau de services et l'EGM :
l'acquisition et l'actualisation, par l'EGM qui dessert alors nouvellement l'EU, des informations de l'élément de réseau de services lorsque des informations de l'élément de réseau de services sont transmises entre des EGM ;
l'acquisition et l'actualisation, par l'EGM qui dessert alors nouvellement l'EU, des informations de l'élément de réseau de services lorsque des informations de l'élément de réseau de services sont transmises entre des EGM, et l'envoi d'un message à l'élément de réseau de services par l'EGM pour actualiser les informations de l'EGM, stockées dans l'élément de réseau de services, après l'acquisition des informations de l'élément de réseau de services ; ou
la réception, par l'élément de réseau de services, d'un nouveau flux d'inscription envoyé par l'EU qui a reçu une ITME attribuée envoyée par l'EGM qui dessert alors nouvellement l'EU, suivie de l'actualisation de l'association entre l'élément de réseau de services et l'EGM qui dessert alors nouvellement l'EGM ;
l'attribution d'une ITME à l'EU par l'EGM qui dessert alors nouvellement l'EU, et la demande, faite à l'EU par l'EGM, de déclencher un nouveau flux d'inscription vers l'élément de réseau de services afin d'actualiser l'association entre l'élément de réseau de services et l'EGM qui dessert alors nouvellement l'EGM ;
le système comportant en outre, si un changement affecte l'élément de réseau de services après l'établissement de l'association entre l'élément de réseau de services et l'EGM :
l'acquisition du paramètre d'informations de l'EGM par un nouvel élément de réseau de services auprès de l'ancien élément de réseau de services et l'envoi d'un message à l'EGM pour actualiser le paramètre d'informations de l'élément de réseau de services stocké dans l'EGM pour le remplacer par le paramètre d'informations du nouvel élément de réseau de services ; ou
la réception, par un nouvel élément de réseau de services, d'un nouveau flux d'inscription envoyé par l'EU et contenant un paramètre d'informations de l'EGM qui dessert alors l'EU, suivie de l'actualisation de l'association entre le nouvel élément de réseau de services et l'EGM qui dessert alors l'EU.

7. Système selon la revendication 6, dans lequel l'élément de réseau de services est en outre conçu pour envoyer à l'EGM un message contenant un paramètre d'informations de l'élément de réseau de services, et l'EGM est conçue pour recevoir le message envoyé par l'élément de réseau de services et contenant le paramètre d'informations de l'élément de réseau de services, et pour acquérir le paramètre d'informations de l'élément de réseau de services à partir du message.

8. Système selon la revendication 6, dans lequel l'élément de réseau de services comprend spécifiquement : une unité de réception, une unité d'acquisition d'informations et une unité d'envoi ;
l'unité de réception étant conçue pour recevoir le message envoyé par l'EU et contenant le paramètre d'informations de l'EGM qui dessert alors l'EU ;
l'unité d'acquisition d'informations étant conçue pour acquérir le paramètre d'informations de l'EGM ; et
l'unité d'envoi étant conçue pour envoyer à l'EGM le message contenant le paramètre d'informations de l'élément de réseau de services.

9. Système selon l'une quelconque des revendications 6 à 8, dans lequel l'élément de réseau de services est une IWF.

10. Equipement Utilisateur, EP, conçu pour envoyer à un élément de réseau de services un message contenant un paramètre d'informations d'une EGM qui dessert alors l'EU (S201);
dans lequel, si un changement affecte l'EGM après l'établissement de l'association entre l'élément de réseau de services et l'EGM , l'EU déclenche un nouveau flux d'inscription vers l'élément de réseau de services afin d'actualiser l'association entre l'élément de réseau de services et l'EGM qui dessert alors nouvellement l'EU après qu'une ITME attribuée a été reçue de l'EGM qui dessert alors nouvellement l'EU ; ou
si un changement affecte l'élément de réseau de services après l'établissement de l'association entre l'élément de réseau de services et l'EGM , l'EU lance une nouvelle procédure d'inscription afin d'actualiser l'association entre le nouvel élément de réseau de services et l'EGM qui dessert alors l'EU.
